# EUROPÄISCHE PATENTSCHRIFT

(11) **EP 3 714 011 B1**
(45) Veröffentlichungstag und Bekanntmachung des Hinweises auf die Patenterteilung: **13.08.2025**
(21) Anmeldenummer: 18812089.3
(22) Anmeldetag: 21.11.2018
(51) Int. Cl.: C09D 175/00, C08G 18/79

(54) **WÄSSRIGE ZUSAMMENSETZUNG UND WÄSSRIGES BESCHICHTUNGSMITTEL**
AQUEOUS COMPOSITION AND AQUEOUS COATING AGENT
COMPOSITION AQUEUSE ET PRODUIT DE REVÊTEMENT AQUEUX

(30) Priorität: 21.11.2017 DE 102017127490
(43) Veröffentlichungstag der Anmeldung: 30.09.2020
(73) Patentinhaber: Brillux GmbH & Co. KG, 48163 Münster (DE)
(72) Erfinder: HÖRSTING, Ingo, 48317 Drensteinfurt (DE); THIELE, Kai, 48167 Münster (DE); FRERICK, Sebastian, 48155 Münster (DE); WONTORA, Beatrice, 44649 Herne (DE)
(74) Vertreter: Cohausz & Florack
(86) Internationale Anmeldenummer: PCT/EP2018/082092
(87) Internationale Veröffentlichungsnummer: WO 2019/101799

(56) Entgegenhaltungen:
- EP-A1- 0 669 352
- EP-A1- 0 978 549
- EP-A1- 2 175 000
- EP-A1- 3 098 267
- EP-A1- 3 135 701
- WO-A1-03/023071
- WO-A1-03/095517
- WO-A1-2006/072080
- WO-A1-2012/052406
- WO-A1-2013/040765
- WO-A1-2016/144753
- JP-A- 2017 071 684
- US-A1- 2012 142 815
- US-A1- 2015 303 338

## Beschreibung

Die vorliegende Erfindung betrifft Kit-of-parts zur Herstellung eines wässrigen Beschichtungsmittels umfassend eine wässrige Zusammensetzung und ein weiteres Mittel, das in der Lage ist, mit Carboxylgruppen einen Aktivester zu bilden, ein wässriges Beschichtungsmittel, das die wässrige Zusammensetzung und das Mittel, das in der Lage ist, mit Carboxylgruppen einen Aktivester zu bilden, enthält sowie die Verwendung des wässrigen Beschichtungsmittels als Lack.

Vor allem im Automotive-Bereich ist seit einiger Zeit eine Entwicklung zu sogenannten Softfeel-Beschichtungen zu beobachten. Derartige Softfeel-Beschichtungen bewirken ein besonderes Griffempfinden (Haptik), das sich als samtig, weich, gummiartig oder warm umschreiben lässt und als angenehm empfunden wird. Weiterhin verleihen derartige Softfeel-Beschichtungen der Oberfläche ein mattes Erscheinungsbild, das als ansprechend empfunden wird.

Im Automotive-Bereich können derartige Beschichtungen mit speziellen Maschinen und Verfahren, etwa in speziellen Beschichtungsanlagen, die mit erhöhten Temperaturen und/oder vermindertem Druck arbeiten, aufgebracht werden. Daher können viele Materialien und Materialkombinationen eingesetzt werden, die zum Beispiel in Lacken für den Innen- und/oder Außenbereich nicht verwendet werden können, da sie sich beispielsweise nicht gut applizieren lassen oder nur schlecht trocknen.

Lacke, insbesondere matte Lacke, leiden häufig unter dem Problem, dass sie dem Endverbraucher nicht als 1-Komponenten- (1K)-Systeme angeboten werden können. Stattdessen werden sie meist als 2-Komponenten- (2K)-Systeme, die normalerweise aus einem Stammlack und einem Härter bestehen, dem Anwender angeboten, der die beiden Komponenten unmittelbar vor der Anwendung vermischen muss. Dies bringt mehrere Nachteile mit sich. Zum einen können auf diese Weise leicht Dosierungsfehler auftreten, aufgrund derer der Lack nicht vollständig aushärtet oder überschüssiger Härter unerwünschte Nebenreaktionen eingeht. Ferner ist das Zeitfenster bis zur Härtung klein, so dass der Anwender den vermischten Lack rasch auftragen muss. Durch dieses kurze Zeitfenster bedingt muss der Anwender auch die Menge an Lack, die er benötigt, genau kennen, um nicht weiterverwertbare Überschüsse möglichst gering zu halten. Schließlich sind die Härter reaktive Substanzen, die oft gesundheitsschädlich sind, so dass Anwender von 2K-Lacksystemen mit diesen gesundheitsschädlichen Substanzen umgehen müssen.

Lacke als 1K-Systeme sind bekannt, die Härtung beruht jedoch oft lediglich auf einer physikalischen Trocknung. Bei der Härtung solcher Lacke findet also keine chemische Vernetzung statt. Nachteilig daran ist die geringere mechanische und/oder chemische Widerstandsfähigkeit dieser Lacke.

Lacke als 1K-Systeme, bei denen bei der Härtung eine chemische Vernetzung stattfindet, sind ebenfalls bekannt. Dabei wird der Stammlack üblicherweise mit einem Härter vermischt, der im Vorfeld mit einem Blockierungsmittel umgesetzt wurde. Um jedoch die Härtung dieser Systeme zu bewirken, muss der Härter zunächst durch Aufheizen aktiviert werden, was einen zusätzlichen Arbeitsschritt bedeutet, gegebenenfalls unerwünschte Substanzen freisetzt und auch nicht immer möglich ist.

Die EP 0 669 352 A1 beschreibt eine wässrige Dispersionen von Polyester-Polyurethanen, die sich im Wesentlichen aus difunktionellen Ausgansmaterialien zusammensetzt.

Die EP 3 098 267 A1 beschreibt eine härtbare Zusammensetzung umfassend ein organisches Polymer, das eine reaktive Siliziumgruppe enthält und eine gebundene Substanz aus Kaolinit und Quarz.

Die WO 2012/0 52406 A1 beschreibt wässrige Zusammensetzungen mit Softfeel-Eigenschaften, die eine wässrige Polyurethan-Polyurea Dispersion, ein hydroxyfunktionelles Polyacrlylatcopolymer und ein Polyisocyanat umfasst.

Die EP 3 135 701 A1 beschreibt eine wässrige Zusammensetzung, die im Wesentlichen ein oder mehrere mehrstufige Acrylemulsionspolymere umfasst.

WO 2006/072080 A1 beschreibt steife Substrate die mit einer Beschichtung versehen sind, welche den Substraten eine "Softfeel" Haptik verleiht.

Die US 2012/142815 A1 beschreibt eine radikalisch polymerisierbare Beschichtungszusammensetzung, die zur Bildung von Schutzbeschichtungen auf Substraten geeignet ist.

Die EP 0 978 549 A1 beschreibt Bindemittel-Härter-Kombinationen für Soft-Feel-Lacke, die ein wasserverdünnbares Bindemittel umfassen.

In der WO 03/095517 A1 werden wässrige Polyurethanzubereitungen beschrieben.

Die WO 2013/040765 A1 beschreibt ein Verfahren zur Herstellung von Kunstleder, das eine Deckschicht, eine Polyurethanschicht und gegebenenfalls eine Substratschicht umfasst.

Die JP 2017 071684 A beschreibt eine wässrige Polyurethandispersion und eine Softfeel-Zusammensetzung, welche die wässrige Polyurethandispersion enthält.

In der WO 2016/144753 A1 wird eine wasserbasierende Grundierungszusammensetzung beschrieben, welche eine wässrige Polyurethandispersion und ein organisches Lösungsmittel umfasst.

Aufgabe der Erfindung ist es, ein Kit-of-parts bereitzustellen, das eine wässrige Zusammensetzung umfasst. Weitere Aufgabe der Erfindung ist es, ein Kit-of-parts bereitzustellen, das eine lange Lagerfähigkeit aufweist und/oder aus dessen Bestandteilen einfach ein wässriges Beschichtungsmittel erhalten werden kann.

Weitere Aufgabe der Erfindung ist es, ein wässriges Beschichtungsmittel bereitzustellen, das als Lack, insbesondere im Innen- und/oder Außenbereich angewendet werden kann.

Eine weitere Aufgabe der Erfindung ist es, ein wässriges Beschichtungsmittel bereitzustellen, das Anwender als Lack als 1K-System benutzen können. Dabei ist es insbesondere wünschenswert, wenn vor der Applikation des Lacks kein zusätzlicher Schritt, insbesondere kein Aktivierungsschritt durch den Anwender wie ein Aufheizschritt, nötig ist.

Eine weitere Aufgabe der Erfindung ist es, ein wässriges Beschichtungsmittel bereitzustellen, das Anwender als Lack als 1K-System, der ein langes Zeitfenster zur Anwendung hat, anwenden können und/oder bei dem der Anwender keine gesundheitsschädlichen Substanzen handhaben muss.

Eine weitere Aufgabe der Erfindung ist es, ein wässriges Beschichtungsmittel, insbesondere als Lack, bereitzustellen, das einen Softfeel-Effekt, insbesondere in Bezug auf das Griffempfinden und/oder auf den optischen Eindruck, zeigt und/oder eine gute mechanische und/oder chemische Widerstandfähigkeit aufweist und/oder eine gute Haftung an Oberflächen zeigt, auf die üblicherweise Lacke aufgetragen werden.

Alle oder einige dieser Aufgaben werden durch die in Anspruch 1 und 8 angegebenen Kit-of-parts, das in Anspruch 12 angegebene wässrige Beschichtungsmittel sowie die in Anspruch 15 angegebene Verwendung gelöst.

Vorteilhafte Ausgestaltungen sind in den abhängigen Ansprüchen angegeben und werden nachfolgend im Einzelnen erläutert.

Die Erfindung stellt dementsprechend ein wässriges Beschichtungsmittel bereit, das als Lack, insbesondere als 1K-System, verwendet werden kann. Das erfindungsgemäße wässrige Beschichtungsmittel kann insbesondere ein langes Zeitfenster für die Anwendung aufweisen. Dennoch ist eine lange Lagerfähigkeit für solche Beschichtungsmittel wünschenswert. Hierfür stellt die Erfindung ein Kit-of-parts bereit, das eine wässrige Zusammensetzung und einen Härter umfasst. Diese beiden Bestandteile können in getrennten Gebinden aufbewahrt werden. Dadurch kann sich eine lange Lagerfähigkeit ergeben. Durch Vermischen der wässrigen Zusammensetzung mit dem Härter kann andererseits unkompliziert das erfindungsgemäße wässrige Beschichtungsmittel erhalten werden. Dementsprechend stellt die Erfindung ferner eine wässrige Zusammensetzung bereit, die Bestandteil des erfindungsgemäßen Kit-of-parts ist. Da der Härter des Kit-of-parts nur in geringen Mengen im erfindungsgemäßen wässrigen Beschichtungsmittel benötigt wird, können sich die Mengen der übrigen Komponenten der wässrigen Zusammensetzung und des erfindungsgemäßen wässrigen Beschichtungsmittels zumindest teilweise überschneiden. Nachfolgend wird zunächst die im erfindungsgemäßen Kit-of-parts enthaltende wässrige Zusammensetzung näher beschrieben, gefolgt von dem Verfahren zur Herstellung der in dem erfindungsgemäßen Kit-of-parts enthaltenden wässrigen Zusammensetzung, dem erfindungsgemäßen Kit-of-parts und dem erfindungsgemäßen wässrigen Beschichtungsmittel.

Das erfindungsgemäße Kit-of-parts enthält, jeweils bezogen auf das Gesamtgewicht des Beschichtungsmittels,
a. 3 bis 25 Gew.-% Bindemittel,
b. 5 bis 25 Gew.-% Vernetzungspolymer,
c. 0,5 bis 10 Gew.-% Partikel mit einer mittleren Partikelgröße von 1 bis 20 µm,
d. 0,01 bis 2 Gew.-% einer alkalischen Komponente,
e. 0,5 bis 50 Gew.% Härter,
f. 30 bis 70 Gew.-% Wasser,
wobei das wässrige Beschichtungsmittel einen pH-Wert von 8 bis 10,5 aufweist, und wobei das Kit-of-parts umfasst:
A) eine wässrige Zusammensetzung enthaltend, jeweils bezogen auf das Gesamtgewicht der Zusammensetzung,
   i. 3 bis 25 Gew.-% Bindemittel,
   ii. 5 bis 25 Gew.-% Vernetzungspolymer,
   iii. 0,5 bis 10 Gew.-% Partikel mit einer mittleren Partikelgröße von 1 bis 20 µm,
   iv. 0,01 bis 2 Gew.-% einer alkalischen Komponente,
   v. 30 bis 70 Gew.-% Wasser
B) einen Härter,
**dadurch gekennzeichnet, dass** der Härter Carbodiimid ist und dass das Bindemittel als Mischung zweier wässriger Bindemitteldispersionen je mit einem Feststoffgehalt von 25 bis 60 Gew.-% vorliegt, wobei das Bindemittel in Form einer wässrigen Polyurethandispersion und einer wässrigen anionischen Polyesterpolyurethandispersion vorliegt.

Überraschend wurde gefunden, dass die Kombination von 3 bis 25 Gew.-% eines Bindemittels mit 5 bis 25 Gew.-% eines Vernetzungspolymers, 0,5 bis 10 Gew.-% Partikel mit einer mittleren Partikelgröße 1 bis 20 µm, und 0,01 bis 2 Gew.-% einer alkalischen Komponente in 30 bis 70 Gew.-% Wasser eine wässrige Zusammensetzung ergibt, die sich gut für einen Kit-of-parts mit einem Härter als weiterem Bestandteil eignet. Durch Zugabe des Härters zu der wässrigen Zusammensetzung kann ein wässriges Beschichtungsmittel erhalten werden, das einen angenehmen Softfeel-Effekt in Bezug auf das Griffempfinden zeigt und/oder als Lack im Innen- und/oder Außenbereich angewendet werden kann und/oder eine gute Haftung auf verschiedenen Oberflächen zeigt und/oder ein langes Zeitfenster zur Anwendung hat und/oder eine gute Widerstandsfähigkeit gegen mechanische und/oder chemische Einwirkungen aufweist und/oder bei dem vom Anwender keine gesundheitsschädlichen Stoffe gehandhabt werden müssen. Trotz des langen Zeitfensters zur Anwendung war es dennoch möglich, wässrige Beschichtungsmittel, insbesondere Lacke, zu erhalten, die nach dem Auftragen auf eine Oberfläche rasch aushärteten.

Ohne an eine wissenschaftliche Theorie gebunden sein zu wollen, scheint die Zugabe des Alkalistellers zu der im erfindungsgemäßen Kit-of-parts enthaltenden wässrigen Zusammensetzung dafür zu sorgen, dass nach Vermischen der wässrigen Zusammensetzung mit dem Härter der Härter im erfindungsgemäßen wässrigen Beschichtungsmittel stabilisiert wird. Dennoch scheint das Abdampfen zumindest einiger der Komponenten aus dem erfindungsgemäßen wässrigen Beschichtungsmittel nach dem Auftragen dafür zu sorgen, dass das wässrige Beschichtungsmittel gut aushärtet. Ferner scheinen durch den Härter chemische Vernetzungsreaktionen bei der Aushärtung abzulaufen, welche zu einer guten mechanischen und/oder chemischen Beständigkeit der Beschichtung führen. Schließlich kann es zur Herstellung des wässrigen Beschichtungsmittels genügen, die beiden Bestandteile des Kit-of-parts zu vermischen, ohne dass weitere Bestandteile hinzugefügt werden müssen.

Die mittlere Partikelgröße, insbesondere der Partikel mit einer Partikelgröße von 1 bis 20 µm, kann dabei insbesondere den D₅₀-Wert bezeichnen. Der D₅₀-Wert kann insbesondere die Größe bezeichnen, bei der 50 %, z.B. 50 Gew.-%, kleiner sind als die angegebene Größe. Beispielsweise würden dann 50 %, z.B. 50 Gew.-%, der Partikel eine theoretische Siebweite passieren. Methoden zur Bestimmung der mittleren Partikelgröße, insbesondere des D₅₀-Werts, sind dem Fachmann bekannt. Die mittlere Partikelgröße, insbesondere der D₅₀-Wert, kann beispielsweise durch Erstellung einer Partikelgrößenverteilung ermittelt werden. Die Messung kann zum Beispiel mittels Lichtstreuung, insbesondere mittels Laserdiffraktometrie oder Photonenkorrelationsspektroskopie, durchgeführt werden. Insbesondere kann die mittlere Partikelgröße, insbesondere der D₅₀-Wert, in einem flüssigen Medium, beispielsweise einem wässrigen Medium, gemessen werden. Die Messung kann insbesondere gemäß der ISO 13321, insbesondere der ISO13321:1996, und/oder der ISO 22412, insbesondere der ISO 22412:2008, durchgeführt werden. Beispielsweise kann zur Bestimmung der mittleren Partikelgröße, insbesondere des D₅₀-Werts, ein Malvern Mastersizer 2000 oder 3000 eingesetzt werden. Weitere Möglichkeiten zur Bestimmung der mittleren Partikelgröße, insbesondere des D₅₀-Werts, stellen Licht- und/oder Laserbeugung dar. Vorzugsweise wird ein Malvern Mastersizer 3000 zur Bestimmung der Partikelgrößenverteilung eingesetzt. Dabei kann vorteilhafterweise nach ISO 13320, insbesondere nach ISO 13320:2009, vorgegangen werden. Ferner kann die mittlere Partikelgröße, insbesondere der D₅₀-Wert, mit Hilfe einer Ultrazentrifuge oder mit chromatographischen Methoden, zum Beispiel der Capillary Hydrodynamic Fractionation (CHDF) bestimmt werden.

Die in dem erfindungsgemäßen Kit-of-parts enthaltene wässrige Zusammensetzung enthält 3 bis 25 Gew.-%, bevorzugt 5 bis 20 Gew.-%, weiter bevorzugt 8 bis 15 Gew.-%, besonders bevorzugt 10 bis 13 Gew.-%, Bindemittel, jeweils bezogen auf das Gesamtgewicht der Zusammensetzung.

Die Angaben bezüglich des Gehalts an Bindemittel in der wässrigen Zusammensetzung beziehen sich jeweils auf das Bindemittel als Feststoffanteil. Erfindungsgemäß wird das Bindemittel bei der Herstellung einer wässrigen Zusammensetzung jedoch in Form einer wässrigen Dispersion zugegeben. Die wässrigen Bindemitteldispersionen enthalten 25 bis 60 Gew.-%, bevorzugt 30 bis 50 Gew.-%, weiter bevorzugt 35 bis 40 Gew.-%, Bindemittel als Feststoffgehalt. Entsprechend liegt das Bindemittel der wässrigen Zusammensetzung in Form einer wässrigen Dispersion mit einem Feststoffgehalt von 25 bis 60 Gew.-%, insbesondere 30 bis 50 Gew.-% oder 35 bis 40 Gew.-%, vor. Das Wasser der Bindemitteldispersion wird als Teil des gesamten Wassergehalts der wässrigen Zusammensetzung gerechnet. Liegt das Bindemittel beispielsweise als 50%ige Dispersion in Wasser vor, so enthält die wässrige Zusammensetzung entsprechend 6 bis 50 Gew.-% der Bindemitteldispersion und entsprechend weniger Wasser, insbesondere 27 bis 45 Gew.-% Wasser, jeweils bezogen auf das Gesamtgewicht der wässrigen Zusammensetzung. Wässrige Zusammensetzungen enthaltend Bindemittel in diesen Mengen haben gute Verarbeitungseigenschaften, insbesondere eine gute Mischbarkeit, gezeigt.

Das Bindemittel in des wässrigen Zusammensetzung des erfindungsgemäßen Kit-ofpart liegt als Mischung zweier wässriger Bindemitteldispersionen je mit einem Feststoffgehalt von 25 bis 60 Gew.-%, insbesondere 30 bis 50 Gew.-% oder 35 bis 40 Gew.-%, vor. Dabei können die wässrigen Bindemitteldispersionen denselben oder einen unterschiedlichen, bevorzugt einen unterschiedlichen Feststoffgehalt aufweisen. Bevorzugt weist eine der Bindemitteldispersionen einen Feststoffgehalt von 35 Gew.-% und die andere einen Feststoffgehalt von 40 Gew.-% auf. Weiter bevorzugt werden die beiden Bindemitteldispersionen in einem Gewichtsverhältnis (Bindemitteldispersion mit einem Feststoffgehalt von 35 Gew.-%) zu (Bindemitteldispersion mit einem Feststoffgehalt von 40 Gew.-%) von 1,3 bis 1,9, insbesondere 1,4 bis 1,8 oder 1,5 bis 1,7, eingesetzt.

Erfindungsgemäß werden als Bindemittel eine wässrige Polyurethandispersion, insbesondere mit einem Feststoffgehalt von 35 Gew.-%, und eine wässrige anionische Polyesterpolyurethandispersion, insbesondere mit einem Feststoffgehalt von 40 Gew.-%, eingesetzt. Es hat sich herausgestellt, dass wässrige Beschichtungsmittel, die derartige Bindemittel enthalten, eine gute Haftung auf verschiedenen Oberflächen, insbesondere auf Metall, Holz, Kunststoffen, sowie Altbeschichtungen und auf geeigneten Grundierungen, zeigen können. Ferner weisen Lacke, die derartige Bindemittel enthalten, ein angenehmes Griff-Empfinden auf.

Die wässrige Zusammensetzung enthält ferner 5 bis 25 Gew.-%, bevorzugt 8 bis 22 Gew.-%, weiter bevorzugt 10 bis 20 Gew.-%, besonders bevorzugt 13 bis 17 Gew.-%, Vernetzungspolymer, jeweils bezogen auf das Gesamtgewicht der Zusammensetzung. Derartige Mengen des Vernetzungspolymers haben sich für eine gute Vernetzung des wässrigen Beschichtungsmittels und damit für eine gute Widerstandsfähigkeit des getrockneten Lacks als vorteilhaft erwiesen.

Das Vernetzungspolymer hat insbesondere die Funktion, mindestens eine funktionelle Gruppe bereitzustellen, mit dem der Härter des wässrigen Beschichtungsmittels, der im Kit-of-parts vorzugsweise separat gelagert wird, eine chemische Reaktion eingeht, so dass eine chemische Vernetzung bewirkt wird. Bevorzugt ist die mindestens eine funktionelle Gruppe des Vernetzungspolymers so gewählt, dass in der wässrigen Zusammensetzung, die den Härter des wässrigen Beschichtungsmittels nicht enthält, keine chemische Vernetzung abläuft.

Vorteilhafterweise weist das Vernetzungspolymer mindestens eine Carboxylgruppe und/oder mindestens eine Hydroxylgruppe und/oder mindestens eine Aminogruppe, bevorzugt mindestens eine Carboxylgruppe, auf. Ferner weist das Vernetzungspolymer vorteilhafterweise eine Säurezahl von 1 bis 20 mg KOH/g auf. Die Säurezahl kann insbesondere auf die Lieferform des Vernetzungspolymers berechnet sein. Die Säurezahl kann insbesondere nach DIN EN ISO 2114, insbesondere nach DIN EN ISO 2114:2002-06, bestimmt werden. Weiter bevorzugt ist das Vernetzungspolymer ausgewählt aus der Gruppe bestehend aus anionische Polyurethane, aliphatische anionische Polyurethane, acrylsäurehaltige Polymere, Polyurethan-Acrylatemulsionen, Polyurethan-Alkydemulsionen, Polyurethane, Polyester-Polyurethane, anionische Polyesterpolyurethane, aliphatische anionische Polyesterpolyurethane, Polycarbonatesterpolyurethane, Polyetherpolyole, Polyacrylatdispersionen, Alkydemulsionen, sowie deren hydroxyfunktionelle Polymere und Mischungen davon. Besonders bevorzugt ist das Vernetzungspolymer ein aliphatisches anionisches Polyurethan.

Die Angaben bezüglich des Gehalts an Vernetzungspolymer in der wässrigen Zusammensetzung beziehen sich jeweils auf das Vernetzungspolymer als Feststoffanteil. Bevorzugt wird das Vernetzungspolymer jedoch in Form einer Dispersion, insbesondere einer wässrigen Dispersion zugegeben. Vorteilhafterweise enthalten diese Vernetzungspolymerdispersionen, insbesondere die wässrigen Vernetzungspolymerdispersionen, 25 bis 60 Gew.-%, bevorzugt 30 bis 50 Gew.-%, weiter bevorzugt 35 bis 45 Gew.-% oder 40 Gew.-%, Vernetzungspolymer als Feststoffgehalt. Entsprechend kann das Vernetzungspolymer der erfindungsgemäßen wässrigen Zusammensetzung in Form einer wässrigen Dispersion mit einem Feststoffgehalt von 25 bis 60 Gew.-%, insbesondere 30 bis 50 Gew.-% oder 35 bis 45 Gew.-% oder 40 Gew.-%, vorliegen. Wird das Vernetzungspolymer als wässrige Vernetzungspolymerdispersion zugegeben, wird das Wasser der Vernetzungspolymerpolymerdispersion als Teil des gesamten Wassergehalts der wässrigen Zusammensetzung gerechnet. Liegt das Vernetzungspolymer beispielsweise als 50%ige Dispersion in Wasser vor, so enthält die wässrige Zusammensetzung entsprechend 10 bis 50 Gew.-% der Bindemitteldispersion und entsprechend weniger Wasser, insbesondere 25 bis 45 Gew.-% Wasser, jeweils bezogen auf das Gesamtgewicht der wässrigen Zusammensetzung. Wässrige Zusammensetzungen enthaltend Vernetzungspolymer in diesen Mengen haben gute Verarbeitungseigenschaften, insbesondere eine gute Mischbarkeit, gezeigt.

Die wässrige Zusammensetzung enthält ferner 0,5 bis 10 Gew.-%, bevorzugt 1 bis 8 Gew.-%, weiter bevorzugt 2 bis 7 Gew.-% oder 3 bis 6 Gew.-%, Partikel mit einer mittleren Partikelgröße von 1 bis 20 µm, jeweils bezogen auf das Gesamtgewicht der Zusammensetzung.

Bevorzugt weisen die Partikel mit einer mittleren Partikelgröße von 1 bis 20 µm eine mittlere Partikelgröße von 2 bis 17 µm, weiter bevorzugt von 3 bis 15 µm, besonders bevorzugt von 4 bis 13 µm oder von 6 bis 10 µm auf. Für die mittlere Partikelgröße und deren Bestimmung gilt das voranstehend Gesagte. Vorteilhafterweise sind die Partikel mit den voranstehend aufgeführten Größen ausgewählt aus der Gruppe bestehend aus Polyurethanpartikel, Polymethylmethacrylatpartikel, Polymethylharnstoffpartikel, Silikatacrylharz-Polymerpartikel, polymere Mikrohohlkugeln, Cellulosefasern, Textilfasern, Korkmehl und Mischungen davon. Besonders bevorzugt handelt es sich um Silikatacrylharz-Polymerpartikel. Derartige Partikel lassen sich gut in die wässrige Zusammensetzung sowie in das wässrige Beschichtungsmittel integrieren und zeigen auch im trockenen Film wenig Entmischungseffekte.

Weiterhin enthält die wässrige Zusammensetzung 0,01 bis 2 Gew.-%, bevorzugt 0,01 bis 1 Gew.-%, weiter bevorzugt 0,01 bis 0,05 Gew.-%, einer alkalischen Komponente, jeweils bezogen auf das Gesamtgewicht der Zusammensetzung. Zweckmäßigerweise ist die alkalische Komponente ausgewählt aus der Gruppe bestehend aus Kaliumhydroxid, Natriumhydroxid, Calciumhydroxid, Ammoniak, Triethylamin, Dimethylaminoethanol, Aminomethylpropanol, Dimethylglucamin und Mischungen davon. Bevorzugt ist die alkalische Komponente im Reinzustand ein wasserlösliches Gas, insbesondere Ammoniak. Bevorzugt liegt die alkalische Komponente in Form einer wässrigen Lösung vor. Weiter bevorzugt liegt die alkalische Komponente als Salmiakgeist vor. Liegt die alkalische Komponente als wässrige Lösung, insbesondere als Salmiakgeist, vor enthält die die wässrige Zusammensetzung bevorzugt 0,01 bis 2 Gew.-%, weiter bevorzugt 0,01 bis 1 Gew.-%, der alkalischen Komponente. Dabei gilt für den Wassergehalt der wässrigen Zusammensetzung das oben zu den Bindemittel- und Vernetzungspolymerdispersionen Gesagte entsprechend. Es hat sich herausgestellt, dass mit den voranstehend genannten alkalischen Komponenten im wässrigen Beschichtungsmittel eine gute Stabilisierung des Mittels, das in der Lage ist mit Carboxylgruppen einen Aktivester zu bilden, erreicht werden kann. Trotzdem kann mit diesen alkalischen Komponenten, insbesondere mit Ammoniak, dabei insbesondere in Form von Salmiakgeist, eine rasche Härtung nach dem Auftragen des wässrigen Beschichtungsmittels erreicht werden.

Die im erfindungsgemäßen Kit-of-parts enthaltenden wässrigen Zusammensetzungen enthaltend eine Kombination aus den vorgenannten Bestandteilen haben vorteilhafte Eigenschaften. Die wässrigen Zusammensetzungen sind Bestandteil in erfindungsgemäßen Kit-of-parts, zusammen mit einem Härter als weiteren Bestandteil, mit denen durch einfaches Vermischen der Bestandteile erfindungsgemäße wässrige Beschichtungsmittel hergestellt werden können, die Anwendern als 1K-Lacke mit einem Zeitfenster bis zur Aushärtung im Gebinde von bis zu zwei Monaten übergeben werden können. Mit derartigen Lacken erstellte Beschichtungen weisen ein angenehmes Griffempfinden auf. Ferner haften sie sehr gut auf diversen Untergründen und/oder lassen sich sehr gut als Lack im Innen- und/oder Außenbereich anwenden. Derartige Lacke verfügen auch über eine gute Widerstandsfähigkeit nach der Aushärtung. Diese Effekte wurden mit wässrigen Zusammensetzungen erzielt, bei denen das Bindemittel in Form einer wässrigen Polyurethandispersion und einer anionischen aliphatischen Polyesterpolyurethandispersion vorlag, das Vernetzungspolymer als wässrige aliphatische anionische Polyurethandispersion vorlag, die Partikel eine mittlere Partikelgröße von 6 bis 10 µm aufwiesen und insbesondere Silikatacrylharz-Polymerpartikel waren und die alkalische Komponente im Reinzustand ein wasserlösliches Gas war, insbesondere die alkalische Komponente in Form von Salmiakgeist vorlag.

Zweckmäßigerweise kann die wässrige Zusammensetzung des erfindungsgemäßen Kit-of-parts zusätzlich 0,1 bis 5 Gew.-%, insbesondere 0,1 bis 3 Gew.-% oder 0,5 bis 1,5 Gew.-%, Mattierungsmittel enthalten, jeweils bezogen auf das Gesamtgewicht der Zusammensetzung. Die Einbindung eines Mattierungsmittels hilft dabei, insbesondere den gewünschten optischen Eindruck beim gehärteten Lack zu erzeugen. Das Mattierungsmittel kann aber auch dabei unterstützen, das gewünschte Griffempfinden für den gehärteten Lack zu erzeugen.

Als Mattierungsmittel werden insbesondere Additive für Beschichtungsstoffe, insbesondere Lacke, bezeichnet, die die Oberfläche der Beschichtung so beeinflussen, dass deren Glanzgrad, insbesondere der Reflektometerwert, sinkt.

Als Mattierungsmittel kommen die verschiedensten Substanzen in Frage. Bevorzugt ist das Mattierungsmittel ausgewählt aus der Gruppe bestehend aus Kieselsäure, pyrogene Kieselsäure, Polymethylharnstoff, keramische Mikrokugeln, Diatomeenerde, Quarzmehle, Talkum und Wachsadditive wie Polyethylenwachse. Bevorzugt wird Kieselsäure als Mattierungsmittel eingesetzt. Diese Mattierungsmittel haben sich als geeignet erwiesen, um die voranstehend beschriebenen Effekte zu erzeugen.

Bevorzugt weisen die Partikel des Mattierungsmittels eine mittlere Partikelgröße, insbesondere einen D₅₀-Wert, von 1 bis 20 µm, bevorzugt von 5 bis 15 µm, weiter bevorzugt von 7 bis 13 µm, weiter bevorzugt von 8 bis 12 µm, besonders bevorzugt von 9 bis 11 µm, auf. Für die mittlere Partikelgröße, insbesondere den D₅₀-Wert, des Mattierungsmittels und deren Bestimmung gilt das voranstehend Gesagte.

Weiterhin kann die wässrige Zusammensetzung in dem erfindungsgemäßen Kit-of parts vorteilhafterweise weitere Teilchen enthalten. Insbesondere kann die wässrige Zusammensetzung zusätzlich 0,1 bis 5 Gew.-%, bevorzugt 0,1 bis 3 Gew.-%, weiter bevorzugt 0,5 bis 2 Gew.-%, jeweils bezogen auf das Gesamtgewicht der Zusammensetzung, Teilchen mit einer Größe von 1 bis 50 µm, bevorzugt von 1 bis 40 µm, weiter bevorzugt von 1 bis 30 µm, weiter bevorzugt von 1 bis 20 µm, weiter bevorzugt von 1 bis 15 µm, weiter bevorzugt von 1 bis 10 µm, besonders bevorzugt von 6 µm, enthalten. Bei der Größe dieser Teilchen handelt es sich insbesondere um den D₉₀-Wert. Der D₉₀-Wert kann insbesondere die Größe bezeichnen, bei der 90 %, z.B. 90 Gew.-%, kleiner sind als die angegebene Größe. Beispielsweise würden dann 90 %, z.B. 90 Gew.-%, der Teilchen eine theoretische Siebweite passieren. Für die dem Fachmann bekannten Methoden zur Ermittlung des D₉₀-Werts gilt das zum D₅₀-Wert Gesagte entsprechend. Vorteilhafterweise sind die zusätzlichen Teilchen ausgewählt aus der Gruppe bestehend aus Polyurethanpartikel, Polymethylmethacrylat-Partikel, Polymethylharnstoffpartikel, Silikatacrylharz-Polymerpartikel, polymere Mikrohohlkugeln, Cellulosefasern, Textilfasern, Korkmehl und Mischungen davon. Bevorzugt handelt es sich bei diesen zusätzlichen Teilchen um Polymethylmethacrylat-Partikel, insbesondere um vernetzte Polymethylmethacrylat-Partikel. Diese können insbesondere einen Brechungsindex von 1,47 bis 1,51, bevorzugt von 1,48 bis 1,50, weiter bevorzugt von 1,487 bis 1,492, aufweisen. Die Zugabe von Teilchen mit derartigen Teilchengrößen kann das Griffempfinden von Oberflächen, die mit dem erfindungsgemäßen wässrigen Beschichtungsmittel behandelt wurden, verbessen.

Ferner kann die wässrige Zusammensetzung zusätzlich mindestens ein Pigment enthalten. Insbesondere kann das wässrige Beschichtungsmittel zusätzlich 0,1 bis 10 Gew.-%, bevorzugt 0,1 bis 5 Gew.-%, weiter bevorzugt 0,5 bis 3 Gew.-%, mindestens ein Pigment enthalten, jeweils bezogen auf das Gesamtgewicht der Zusammensetzung.

Als Pigmente können ebenfalls verschiedene Substanzen eingesetzt werden. Beispielsweise können nur anorganische oder nur organische Pigmente oder Mischungen von anorganischen und organischen Pigmenten eingesetzt werden.

Bevorzugt ist das Pigment ausgewählt aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon.

Als anorganische Pigmente können beispielsweise Oxide wie Titandioxid, Eisenoxide, z.B. P.Y. 42, P.R. 101, P.Bk. 11, Chromoxidgrün, z.B. P.G. 17, Mischphasenpigmente z.B. Cobaltoxide Blau P.B. 28 und Grün P.G. 50, Bismutvanadat P.Y. 184, Rutil-Zinn-Zink P.O. 216, Silikate, z.B. Ultramarinblau P.B. 29 und Kohlenstoff, z.B. Ruß P.Bk. 7 verwendet werden.

Als organische Pigmente können zum Beispiel Azopigmente, z.B. Arylidgelb (Monoazo) P.Y. 74, Polycyclische Pigmente, z.B. Chinacridone P.R. 122, Perinone P.O. 43, Pyrazolo-Chinazolon P.O. 67, Diketo-Pyrrolo-Pyrrol (DPP) P.R. 254, Dioxazine P.V. 23 und Metallkomplexpigmente, z.B. Kupferphthalocyanine Blau P.B. 15:3 und Grün P.G. 7 eingesetzt werden.

Die für die Beispiele verwendeten Bezeichnungen der anorganischen und organischen Pigmente entsprechen den Generic Names des Colour Index der British Society of Dyers and Colourists.

Durch die Verwendung von Pigmenten in der wässrigen Zusammensetzung können farbige wässrige Beschichtungsmittel hergestellt werden, die im Wesentlichen das ganze Farbspektrum abdecken. Damit können insbesondere Buntlacke hergestellt werden.

Die wässrigen Zusammensetzungen können jedoch auch frei von Pigment und somit farblos sein. Mit derartigen wässrigen Zusammensetzungen können farblose wässrige Beschichtungsmittel hergestellt werden, die sich insbesondere als Klarlacke eignen. Bevorzugt enthält die in dem erfindungsgemäßen Kit-of-parts enthaltende wässrige Zusammensetzung kein Pigment.

Zusätzlich kann die in dem erfindungsgemäßen Kit-of-parts enthaltende wässrige Zusammensetzung auch noch weitere übliche Zusätze und/oder Additive enthalten. Insbesondere kann die wässrige Zusammensetzung zusätzlich ein oder mehrere weitere Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthalten.

Die Zusätze und/oder Additive können in Reinform und/oder als Mischungen, insbesondere mit Wasser, vorliegen.

Zusätze und/oder Additive können insgesamt in einer Menge von 0,1 bis 30 Gew.-%, bevorzugt 0,5 bis 20 Gew.-%, weiter bevorzugt 1 bis 10 Gew.-%, jeweils bezogen auf das Gesamtgewicht der wässrigen Zusammensetzung, enthalten sein.

Beispiele für Verdicker sind Alkoholalkoxylate, Ethylenoxid-Propylenoxid-Copolymere, Maleinsäureanhydrid-Diisobutylen-Copolymere, Polyacryl- und Polymethacrylsäure und deren Salze, Methylcellulosen, Carboxymethylcellulosen, Hydroxymethylcellulosen, Polyurethane, Alkalimetallphosphate und Salze modifizierter Phosphorsäuren, sowie deren Mischungen.

Beispiele für Entschäumer sind Polyglykole, Triglyceride, Polysiloxan-Polyether-Copolymere und Silikonöle.

Beispiele für Hydrophobiermittel sind insbesondere oligomere und polymere Siloxane und Silikonharze.

Beispiele für Konservierungsmittel sind Isothiazoline.

Beispiele für Netzmittel sind Polysiloxane und Acrylcopolymere.

Beispiele für Lösungsmittel sind ein- oder mehrwertige Alkohole.

Beispiele für Substratbenetzungsmittel sind Tenside.

Die Erfindung stellt ferner ein Kit-of-parts zur Herstellung eines wässrigen Beschichtungsmittels enthaltend, jeweils bezogen auf das Gesamtgewicht des Beschichtungsmittels,
a. 3 bis 25 Gew.-% Bindemittel,
b. 5 bis 25 Gew.-% Vernetzungspolymer,
c. 0,5 bis 10 Gew.-% Partikel mit einer mittleren Partikelgröße von 1 bis 20 µm,
d. 0,01 bis 2 Gew.-% einer alkalischen Komponente,
e. 0,5 bis 5 Gew.-% Härter,
f. 30 bis 70 Gew.-% Wasser,
wobei das wässrige Beschichtungsmittel einen pH-Wert von 8 bis 10,5 aufweist und wobei das Kit-of-parts umfasst:
A) eine wässrige Zusammensetzung erhältlich nach einem Verfahren umfassend die Schritte
   a. Bereitstellen einer Zusammensetzung enthaltend, jeweils bezogen auf das Gesamtgewicht der Zusammensetzung,
      i. 3 bis 25 Gew.-% Bindemittel,
      ii. 5 bis 25 Gew.-% Vernetzungspolymer,
      iii. 0,5 bis 10 Gew.-% Partikel mit einer mittleren Partikelgröße von 1 bis 20 µm,
      iv. 0,01 bis 2 Gew.-% einer alkalischen Komponente,
      v. 30 bis 70 Gew.-% Wasser,
   b. Dispergieren der in a. genannten Komponenten
B) einen Härter,
dadurch gekennzeichnet, dass der Härter Carbodiimid ist und dass das Bindemittel als Mischung zweier wässriger Bindemitteldispersionen je mit einem Feststoffgehalt von 25 bis 60 Gew.-% vorliegt, wobei das Bindemittel in Form einer wässrigen Polyurethandispersion und einer wässrigen anionischen Polyesterpolyurethandispersion vorliegt, bereit.

Die angeführten Schritte können in beliebiger Reihenfolge durchgeführt werden, vorzugsweise werden sie in der angegebenen Reihenfolge durchgeführt.

Zum Dispergieren der Bestandteile können dem Fachmann bekannte Vorrichtungen verwendet werden. Beispielsweise können Turbomills, Perlmühlen oder Dissolver, bevorzugt Dissolver, hierfür verwendet werden.

Das im Zusammenhang mit der wässrigen Zusammensetzung zum Bindemittel Gesagte gilt gleichermaßen auch für das Bindemittel des Verfahrens.

Das im Zusammenhang mit der wässrigen Zusammensetzung zum Vernetzungspolymer Gesagte gilt gleichermaßen auch für das Vernetzungspolymer des Verfahrens.

Das im Zusammenhang mit der wässrigen Zusammensetzung zu den Partikeln mit einer mittleren Partikelgröße von 1 bis 20 µm Gesagte gilt gleichermaßen auch für die Partikel mit einer mittleren Partikelgröße von 1 bis 20 µm des Verfahrens.

Das im Zusammenhang mit der wässrigen Zusammensetzung zur alkalischen Komponente Gesagte gilt gleichermaßen auch für die alkalische Komponente des Verfahrens.

Insbesondere kann die Zusammensetzung des Verfahrens 5 bis 20 Gew.-%, insbesondere 8 bis 15 Gew.-% oder 10 bis 13 Gew.-%, Bindemittel und/oder 8 bis 22 Gew.-%, insbesondere 10 bis 20 Gew.-% oder 13 bis 17 Gew.-%, Vernetzungspolymer und/oder 1 bis 8 Gew.-%, insbesondere 2 bis 7 Gew.-% oder 3 bis 6 Gew.-%, Partikel mit einer mittleren Partikelgröße von 1 bis 20 µm und/oder 0,01 bis 1 Gew.-%, insbesondere 0,01 bis 0,05 Gew.-% der alkalische Komponente und/oder zusätzlich 0,1 bis 5 Gew.-%, insbesondere 0,1 bis 3 Gew.-% oder 0,5 bis 1,5 Gew.-%, Mattierungsmittel enthalten, jeweils bezogen auf das Gesamtgewicht der Zusammensetzung.

Ferner kann die Zusammensetzung des Verfahrens auch zusätzlich 0,1 bis 5 Gew.-%, bevorzugt 0,1 bis 3 Gew.-%, weiter bevorzugt 0,5 bis 2 Gew.-%, jeweils bezogen auf das Gesamtgewicht der Zusammensetzung, Teilchen mit einer Größe von 1 bis 50 µm, bevorzugt von 1 bis 10 µm, und/oder mindestens ein Pigment, insbesondere 0,1 bis 10 Gew.-%, bevorzugt 0,1 bis 5 Gew.-%, weiter bevorzugt 0,5 bis 3 Gew.-%, jeweils bezogen auf das Gesamtgewicht der Zusammensetzung, mindestens ein Pigment und/oder 0,1 bis 30 Gew.-%, bevorzugt 0,5 bis 20 Gew.-%, weiter bevorzugt 1 bis 10 Gew.-%, besonders bevorzugt 1,5 bis 5 Gew.-%, jeweils bezogen auf das Gesamtgewicht der Zusammensetzung, Zusätze und/oder Additive wie zum Beispiel Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthalten.

Bevorzugt enthält die Zusammensetzung des Verfahrens kein Pigment.

Das im Zusammenhang mit der wässrigen Zusammensetzung zum Mattierungsmittel, dem mindestens einen Pigment, den Teilchen mit einer Größe von 1 bis 50 µm und den weiteren Zusätzen und/oder Additiven Gesagte gilt gleichermaßen auch für das Mattierungsmittel, das Pigment, die Teilchen und/oder die Zusätze und/oder Additive der Zusammensetzung des Verfahrens.

Gegenstand der Erfindung ist weiterhin ein Kit-of-parts umfassend eine wässrige Zusammensetzung sowie einen Härter.

In erfindungsgemäßen Kit-of-parts können die wässrige Zusammensetzung und der Härter in voneinander getrennten Gebinden aufbewahrt werden. Durch die Trennung der Gebinde kann in erfindungsgemäßen Kit-of-parts eine lange Aufbewahrungszeit erreicht werden. Dennoch kann aus den Kit-of-parts durch einfaches Vermischen, insbesondere mittels einer Farbmischmaschine oder manueller Vermischung ein erfindungsgemäßes wässriges Beschichtungsmittel erhalten werden, das Anwendern direkt gegeben werden kann, aber dennoch eine Aufbewahrungszeit von bis zu zwei Monaten aufweist.

Erfindungsgemäß ist der Härter ein Carbodiimid, weiter bevorzugt ein polymeres Carbodiimid. Geeignete Carbodiimide können insbesondere funktionelle Carbodiimidgruppen (N=C=N) aufweisen. Carbodiimide können insbesondere organische Verbindungen mit kumulierten Doppelbindungen der allgemeinen Strukturformel R-N=C=N-R sein, wobei jeder Rest R unabhängig voneinander ausgewählt sein kann aus der Gruppe bestehend aus H, optional substituierter Kohlenwasserstoffrest mit 1 bis 20 Kohlenstoffatomen, optional substituiertes C1-C10-Alkyl, Acyl, Aoryl, Imidoyl, Sulfonyl, Stickstoff, Silicium und metallsubstituierte Reste, insbesondere aus der Gruppe bestehend aus H, optional substituierter Kohlenwasserstoffrest mit 1 bis 20 Kohlenstoffatomen, optional substituiertes C1-C10-Alkyl, Acyl, Aoryl, Imidoyl und Sulfonyl. Kohlenwasserstoffreste und Alkylgruppen können insbesondere auch Heteroatome, bevorzugt ausgewählt aus Stickstoff, Sauerstoff und Schwefel, enthalten und/oder mit C1-C3 Alkylgruppen, Hydroxylgruppen, Aminogruppen und/oder Dimethylaminogruppen substituiert sein. Beispiele für Carbodiimide sind Dicyclohexylcarbodiimid, Diisopropylcarbodiimid, 1-Ethyl-3-(3-dimethylaminopropyl)carbodiimid.

Polymeres Carbodiimid weist bevorzugt mindestens eine, insbesondere zwei oder mehr funktionelle Carbodiimidgruppen (N=C=N) auf. Diese können im Rückgrat des Polymers oder als Seitenketten vorhanden sein. Polymeres Carbodiimid ist ferner vorteilhafterweise nicht-ionisch. Polymeres Carbodiimid weist bevorzugt ein Carbodiimid-Äquivalentengewicht von 200 bis 800 g/mol, weiter bevorzugt von 200 bis 700 g/mol, weiter bevorzugt von 200 bis 600 g/mol, besonders bevorzugt von 300 bis 500 g/mol, auf. Polymeres Carbodiimid liegt bevorzugt als Dispersion in Wasser oder geeigneten Lösemittelgemischen vor, insbesondere mit einem Feststoffgehalt von 20 bis 100 Gew.-%, bevorzugt 20 bis 90 Gew.-%, weiter bevorzugt 20 bis 80 Gew.-%, weiter bevorzugt 20 bis 70 Gew.-%, weiter bevorzugt 20 bis 60 Gew.-%, weiter bevorzugt 30 bis 50 Gew.-%, besonders bevorzugt 40 Gew.-%.

Die Carbodiimidgruppe kann dabei insbesondere die funktionelle Gruppe sein, die mit dem Vernetzungspolymer eine chemische Reaktion eingehen kann.

Mit dem erfindungsgemäßen Kit-of-parts können erfindungsgemäße wässrige Beschichtungsmittel durch Vermischen der Bestandteile des Kit-of-parts erhalten werden. Bevorzugt wird dabei das Verhältnis von wässriger Zusammensetzung und Härter so gewählt, dass pro Mol funktioneller Gruppe, insbesondere pro Mol Carboxylgruppe, des Vernetzungspolymers zwei Mol an Carbodiimid-Gruppen vorhanden sind.

Dementsprechend stellt die Erfindung ein wässriges Beschichtungsmittel bereit enthaltend, jeweils bezogen auf das Gesamtgewicht des Beschichtungsmittels,
a. 3 bis 25 Gew.-% Bindemittel,
b. 5 bis 25 Gew.-% Verneztungspolymer,
c. 0,5 bis 10 Gew.-% Partikel mit einer mittleren Partikelgröße von 1 bis 20 µm,
d. 0,01 bis 2 Gew.-% einer alkalischen Komponente,
e. 0,5 bis 5 Gew.-% Härter,
f. 30 bis 70 Gew.-% Wasser,
wobei das wässrige Beschichtungsmittel einen pH-Wert von 8 bis 10,5 aufweist, dadurch gekennzeichnet, dass der Härter Carbodiimid ist und dass das Bindemittel als Mischung zweier wässriger Bindemitteldispersionen je mit einem Feststoffgehalt von 25 bis 60 Gew.-% vorliegt, wobei das Bindemittel in Form einer wässrigen Polyurethandispersion und einer wässrigen anionischen Polyesterpolyurethandispersion vorliegt.

Das wässrige Beschichtungsmittel weist bevorzugt einen pH-Wert von 9 bis 10 auf. Bei diesem pH-Wert weist das wässrige Beschichtungsmittel eine hohe Lagerstabilität auf.

Das im Zusammenhang mit der erfindungsgemäßen wässrigen Zusammensetzung zum Bindemittel Gesagte gilt gleichermaßen auch für das Bindemittel des erfindungsgemäßen wässrigen Beschichtungsmittels.

Das im Zusammenhang mit der wässrigen Zusammensetzung zum Vernetzungspolymer Gesagte gilt gleichermaßen auch für das Verneztungspolymer des erfindungsgemäßen wässrigen Beschichtungsmittels.

Das im Zusammenhang mit der wässrigen Zusammensetzung zu den Partikeln mit einer mittleren Partikelgröße von 1 bis 20 µm Gesagte gilt gleichermaßen auch für die Partikel mit einer mittleren Partikelgröße von 1 bis 20 µm des erfindungsgemäßen wässrigen Beschichtungsmittels.

Das im Zusammenhang mit der wässrigen Zusammensetzung zur alkalischen Komponente Gesagte gilt gleichermaßen auch für die alkalische Komponente des erfindungsgemäßen wässrigen Beschichtungsmittels.

Insbesondere kann das erfindungsgemäße wässrige Beschichtungsmittel 5 bis 20 Gew.-%, insbesondere 8 bis 15 Gew.-% oder 10 bis 13 Gew.-%, Bindemittel und/oder 8 bis 22 Gew.-%, insbesondere 10 bis 20 Gew.-% oder 13 bis 17 Gew.-%, Verneztungspolymer und/oder 1 bis 8 Gew.-%, insbesondere 2 bis 7 Gew.-% oder 3 bis 6 Gew.-%, Partikel mit einer mittleren Partikelgröße von 1 bis 20 µm und/oder 0,01 bis 1 Gew.-%, insbesondere 0,01 bis 0,05 Gew.-% der alkalischen Komponente und/oder 0,5 bis 4 Gew.-%, insbesondere 1 bis 2 Gew.-% Härter und/oder zusätzlich 0,1 bis 5 Gew.-%, insbesondere 0,1 bis 3 Gew.-% oder 0,5 bis 1,5 Gew.-%, Mattierungsmittel enthalten, jeweils bezogen auf das Gesamtgewicht des Beschichtungsmittels.

Ferner kann das erfindungsgemäße wässrige Beschichtungsmittel auch zusätzlich 0,1 bis 5 Gew.-%, bevorzugt 0,1 bis 3 Gew.-%, weiter bevorzugt 0,5 bis 2 Gew.-%, jeweils bezogen auf das Gesamtgewicht des Beschichtungsmittels, Teilchen mit einer Größe von 1 bis 50 µm, bevorzugt von 1 bis 10 µm, und/oder mindestens ein Pigment, insbesondere 0,1 bis 10 Gew.-%, bevorzugt 0,1 bis 5 Gew.-%, weiter bevorzugt 0,5 bis 3 Gew.-%, jeweils bezogen auf das Gesamtgewicht des Beschichtungsmittels, mindestens ein Pigment und/oder 0,1 bis 30 Gew.-%, bevorzugt 0,5 bis 20 Gew.-%, weiter bevorzugt 1 bis 10 Gew.-%, besonders bevorzugt 1,5 bis 5 Gew.-%, jeweils bezogen auf das Gesamtgewicht des Beschichtungsmittels, Zusätze und/oder Additive wie zum Beispiel Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthalten.

Bevorzugt enthält das erfindungsgemäße wässrige Beschichtungsmittel kein Pigment.

Das im Zusammenhang mit der wässrigen Zusammensetzung zum Mattierungsmittel, dem mindestens einen Pigment, den Teilchen mit einer Größe von 1 bis 50 µm und den weiteren Zusätzen und/oder Additiven Gesagte gilt gleichermaßen auch für das Mattierungsmittel, das Pigment, die Teilchen und/oder die Zusätze und/oder Additive des wässrigen Beschichtungsmittels.

Das im Zusammenhang mit dem Kit-of-parts zum Härter Gesagte gilt gleichermaßen auch für den Härter des erfindungsgemäßen wässrigen Beschichtungsmittels.

Das wässrige Beschichtungsmittel ist für verschiedene Verwendungen geeignet. Insbesondere eignet es sich als Lack, insbesondere als Einkomponenten-Lack. Dementsprechend ist die Verwendung des erfindungsgemäßen wässrigen Beschichtungsmittels als Lack, insbesondere für den Innen- und/oder Außenbereich, ebenfalls Gegenstand der Erfindung.

Die Erfindung wird im Folgenden durch Beispiele näher erläutert, die jedoch nur der Veranschaulichung dienen und nicht limitierend sind.

### BEISPIEL

Eine wässrige Zusammensetzung A mit der folgenden, in Tabelle 1 wiedergegebenen Formulierung wurde hergestellt durch Mischen der in Tabelle 1 angegebenen Bestandteile, dosierte Angaben jeweils in Gew.-%.

**Tabelle 1: Rezeptur der wässrigen Zusammensetzung A**

| **Bestandteil** | **Menge (Gew.-%)** |
|---|---|
| Polyurethandispersion für Softfeel Effekte, als 35%ige wässrige Dispersion | 20 |
| Aliphatische anionische Polyurethandispersion, als 40%ige wässrige Dispersion | 37 |
| Anionische aliphatische Polyesterpolyurethandispersion, als 40%ige wässrige Dispersion | 13 |
| Entschäumer, 20%ig in Wasser | 2 |
| Netzmittel | 1 |
| Mattierungsmittel | 0,7 |
| Partikel mit einer mittleren Partikelgröße von 6 bis 10 µm | 4 |
| Teilchen mit einer Partikelgröße D₉₀ von 6 µm | 1 |
| Verdicker, 25%ig in Wasser | 3 |
| Lösungsmittel | 7 |
| Dispergiermittel | 1,5 |
| Alkalische Komponente, 15%ig in Wasser | 0,2 |
| Wasser | 9,6 |

Eine Zusammensetzung mit der in Tabelle 1 angegebenen Rezeptur wurde mit Hilfe eines Dissolvers dispergiert, wodurch die wässrige Zusammensetzung **A** erhalten wurde.

Die wässrige Zusammensetzung **A** wurde in Verbindung mit einem polymeren Carbodiimid, das als 40 Gew.-%ige wässrige Dispersion vorlag, wobei das Carbodiimid-Äquivalentgewicht 393 g/mol betrug, als Härter als Kit-of-parts bereitgestellt.

Durch manuelles Vermischen von 19 Gewichtsteilen der wässrigen Zusammensetzung **A** mit 1 Gewichtsteil des polymeren Carbodiimid wurde ein wässriges Beschichtungsmittel erhalten, das als Lack als 1K-System an Anwender abgegeben werden konnte. Dieser Lack konnte zwei Monate lang in einem Gebinde aufbewahrt werden, ohne auszuhärten. Dieser Lack wurde im Innen- und Außenbereich auf Metall, Holz, Kunststoffen, sowie Altbeschichtungen und auf geeigneten Grundierungen verwendet. Der Lack haftete gut an den Oberflächen, härtete innerhalb von 1 bis vier Stunden aus und wies eine gute mechanische und chemische Beständigkeit, insbesondere gegen Wasser und Haushaltschemikalien, auf. Die Beschichtung wies zudem ein angenehmes Griffempfinden auf.

## Patentansprüche

1. Kit-of-parts zur Herstellung eines wässrigen Beschichtungsmittels enthaltend, jeweils bezogen auf das Gesamtgewicht des Beschichtungsmittels,
a. 3 bis 25 Gew.-% Bindemittel,
b. 5 bis 25 Gew.-% Vernetzungspolymer,
c. 0,5 bis 10 Gew.-% Partikel mit einer mittleren Partikelgröße von 1 bis 20 µm,
d. 0,01 bis 2 Gew.-% einer alkalischen Komponente,
e. 0,5 bis 5 Gew.-% Härter,
f. 30 bis 70 Gew.-% Wasser,
wobei das wässrige Beschichtungsmittel einen pH-Wert von 8 bis 10,5 aufweist, und wobei das Kit-of-parts umfasst:
A) eine wässrige Zusammensetzung enthaltend, jeweils bezogen auf das Gesamtgewicht der Zusammensetzung,
i. 3 bis 25 Gew.-% Bindemittel,
ii. 5 bis 25 Gew.-% Vernetzungspolymer,
iii. 0,5 bis 10 Gew.-% Partikel mit einer mittleren Partikelgröße von 1 bis 20 µm,
iv. 0,01 bis 2 Gew.-% einer alkalischen Komponente,
v. 30 bis 70 Gew.-% Wasser
B) einen Härter,
**dadurch gekennzeichnet, dass** der Härter Carbodiimid ist und dass das Bindemittel als Mischung zweier wässriger Bindemitteldispersionen je mit einem Feststoffgehalt von 25 bis 60 Gew.-% vorliegt, wobei das Bindemittel in Form einer wässrigen Polyurethandispersion und einer wässrigen anionischen Polyesterpolyurethandispersion vorliegt.

2. Kit-of-parts gemäß Anspruch 1, **dadurch gekennzeichnet, dass** die Zusammensetzung 5 bis 20 Gew.-%, insbesondere 8 bis 15 Gew.-% oder 10 bis 13 Gew.-%, Bindemittel enthält, jeweils bezogen auf das Gesamtgewicht der Zusammensetzung und/oder das Bindemittel als Mischung zweier wässriger Bindemitteldispersionen je mit einem Feststoffgehalt von 30 bis 50 Gew.-% oder 35 bis 40 Gew.-%, vorliegt.

3. Kit-of-parts gemäß Anspruch 1 oder 2, **dadurch gekennzeichnet, dass** die Zusammensetzung 8 bis 22 Gew.-%, insbesondere 10 bis 20 Gew.-% oder 13 bis 17 Gew.-%, des Vernetzungspolymers enthält, jeweils bezogen auf das Gesamtgewicht der Zusammensetzung und/oder das Vernetzungspolymer mindestens eine Carboxylgruppe und/oder mindestens eine Hydroxylgruppe und/oder mindestens eine Aminogruppe, insbesondere mindestens eine Carboxylgruppe, aufweist und/oder ausgewählt ist aus der Gruppe bestehend aus anionische Polyurethane, aliphatische anionische Polyurethane, acrylsäurehaltige Polymere Polyurethan-Acrylatemulsionen, Polyurethan-Alkydemulsionen, Polyurethane, Polyester-Polyurethane, anionische Polyesterpolyurethane, aliphatische anionische Polyesterpolyurethane, Polycarbonatesterpolyurethane, Polyetherpolyole, Polyacrylatdispersionen, Alkydemulsionen, sowie deren hydroxyfunktionelle Polymere und Mischungen davon.

4. Kit-of-parts gemäß einem der vorstehenden Ansprüche, **dadurch gekennzeichnet, dass** die Zusammensetzung 1 bis 8 Gew.-%, insbesondere 2 bis 7 Gew.-% oder 3 bis 6 Gew.-%, Partikel mit einer mittleren Partikelgröße von 1 bis 20 µm enthält, jeweils bezogen auf das Gesamtgewicht der Zusammensetzung und/oder die Partikel mit einer mittleren Partikelgröße von 1 bis 20 µm eine mittlere Partikelgröße von 2 bis 17 µm, insbesondere von 3 bis 15 µm oder von 4 bis 13 µm oder von 6 bis 10 µm aufweisen und/oder ausgewählt sind aus der Gruppe bestehend aus Polyurethanpartikel, Polymethylmethacrylatpartikel, Polymethylharnstoffpartikel, Silikatacrylharz-Polymerpartikel, polymere Mikrohohlkugeln, Cellulosefasern, Textilfasern, Korkmehl und Mischungen davon, insbesondere Silikatacrylharz-Polymerpartikelsind.

5. Kit-of-parts gemäß einem der vorstehenden Ansprüche, **dadurch gekennzeichnet, dass** die Zusammensetzung 0,01 bis 1 Gew.-%, insbesondere 0,01 bis 0,05 Gew.-% der alkalischen Komponente enthält, jeweils bezogen auf das Gesamtgewicht der Zusammensetzung, und/oder dass die alkalische Komponente ausgewählt ist aus der Gruppe bestehend aus Kaliumhydroxid, Natriumhydroxid, Calciumhydroxid, Ammoniak, Triethylamin, Dimethylaminoethanol, Aminomethylpropanol, Dimethylglucamin und Mischungen davon und/oder dass die alkalische Komponente im Reinzustand ein wasserlösliches Gas ist und/oder dass die alkalische Komponente in Form einer wässrigen Lösung vorliegt, insbesondere Salmiakgeist ist.

6. Kit-of-parts gemäß einem der vorstehenden Ansprüche, **dadurch gekennzeichnet, dass** die Zusammensetzung zusätzlich 0,1 bis 5 Gew.-%, insbesondere 0,1 bis 3 Gew.-% oder 0,5 bis 1,5 Gew.-%, Mattierungsmittel enthält, jeweils bezogen auf das Gesamtgewicht der Zusammensetzung, wobei das Mattierungsmittel vorzugsweise ausgewählt ist aus der Gruppe bestehend aus pyrogene Kieselsäure, Polymethylharnstoff, keramische Mikrokugeln, Diatomeenerde, Quarzmehle, Talkum und Wachsadditive wie Polyethylenwachse und/oder eine mittlere Partikelgröße, insbesondere einen D₅₀-Wert, von 1 bis 20 µm, insbesondere von 5 bis 15 µm, insbesondere von 7 bis 13 µm, insbesondere von 8 bis 12 µm, insbesondere von 9 bis 11 µm, aufweist.

7. Kit-of-parts gemäß einem der vorstehenden Ansprüche, **dadurch gekennzeichnet, dass** die Zusammensetzung zusätzlich mindestens ein Pigment enthält und/oder die Zusammensetzung zusätzlich ein oder mehrere weitere Zusätze und/oder Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthält.

8. Kit-of-parts zur Herstellung eines wässrigen Beschichtungsmittels enthaltend, jeweils bezogen auf das Gesamtgewicht des Beschichtungsmittels,
a. 3 bis 25 Gew.-% Bindemittel,
b. 5 bis 25 Gew.-% Vernetzungspolymer,
c. 0,5 bis 10 Gew.-% Partikel mit einer mittleren Partikelgröße von 1 bis 20 µm,
d. 0,01 bis 2 Gew.-% einer alkalischen Komponente,
e. 0,5 bis 5 Gew.-% Härter,
f. 30 bis 70 Gew.-% Wasser,
wobei das wässrige Beschichtungsmittel einen pH-Wert von 8 bis 10,5 aufweist und wobei das Kit-of-parts umfasst:
A) eine wässrige Zusammensetzung erhältlich nach einem Verfahren umfassend die Schritte
a. Bereitstellen einer Zusammensetzung enthaltend, jeweils bezogen auf das Gesamtgewicht der Zusammensetzung,
i. 3 bis 25 Gew.-% Bindemittel,
ii. 5 bis 25 Gew.-% Vernetzungspolymer,
iii. 0,5 bis 10 Gew.-% Partikel mit einer mittleren Partikelgröße von 1 bis 20 µm,
iv. 0,01 bis 2 Gew.-% einer alkalischen Komponente,
v. 30 bis 70 Gew.-% Wasser,
b. Dispergieren der in a. genannten Komponenten
B) einen Härter,
**dadurch gekennzeichnet, dass** der Härter Carbodiimid ist und dass das Bindemittel als Mischung zweier wässriger Bindemitteldispersionen je mit einem Feststoffgehalt von 25 bis 60 Gew.-% vorliegt, wobei das Bindemittel in Form einer wässrigen Polyurethandispersion und einer wässrigen anionischen Polyesterpolyurethandispersion vorliegt.

9. Kit-of-parts nach Anspruch 8, **dadurch gekennzeichnet, dass** die Zusammensetzung 5 bis 20 Gew.-%, insbesondere 8 bis 15 Gew.-% oder 10 bis 13 Gew.-%, Bindemittel und/oder 8 bis 22 Gew.-%, insbesondere 10 bis 20 Gew.-% oder 13 bis 17 Gew.-%, Vernetzungspolymer und/oder 1 bis 8 Gew.-%, insbesondere 2 bis 7 Gew.-% oder 3 bis 6 Gew.-%, Partikel mit einer mittleren Partikelgröße von 1 bis 20 µm und/oder 0,01 bis 1 Gew.-%, insbesondere 0,01 bis 0,05 Gew.-% der alkalische Komponente und/oder zusätzlich 0,1 bis 5 Gew.-%, insbesondere 0,1 bis 3 Gew.-% oder 0,5 bis 1,5 Gew.-%, Mattierungsmittel enthält, jeweils bezogen auf das Gesamtgewicht der Zusammensetzung.

10. Kit-of-parts nach einem der Ansprüche 8 oder 9, **dadurch gekennzeichnet, dass** das Bindemittel gemäß Anspruch 2 und/oder das Vernetzungspolymer gemäß Anspruch 3 und/oder die Partikel mit einer mittleren Partikelgröße von 1 bis 20 µm gemäß Anspruch 4 und/oder die alkalische Komponente gemäß Anspruch 5 und/oder das optionale Mattierungsmittel gemäß Anspruch 6 definiert ist und/oder die Zusammensetzung zusätzlich mindestens ein Pigment und/oder ein oder mehrere Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthält.

11. Kit-of-parts gemäß einem der vorstehenden Ansprüche, **dadurch gekennzeichnet, dass** der Härter ein Mittel ist, das in der Lage ist mit Carboxylgruppen einen Aktivester zu bilden, nämlich polymeres Carbodiimid, ist.

12. Wässriges Beschichtungsmittel enthaltend, jeweils bezogen auf das Gesamtgewicht des Beschichtungsmittels,
a. 3 bis 25 Gew.-% Bindemittel,
b. 5 bis 25 Gew.-% Vernetzungspolymer,
c. 0,5 bis 10 Gew.-% Partikel mit einer mittleren Partikelgröße von 1 bis 20 µm,
d. 0,01 bis 2 Gew.-% einer alkalischen Komponente,
e. 0,5 bis 5 Gew.-% Härter,
f. 30 bis 70 Gew.-% Wasser,
wobei das wässrige Beschichtungsmittel einen pH-Wert von 8 bis 10,5 aufweist, **dadurch gekennzeichnet, dass** der Härter Carbodiimid ist und dass das Bindemittel als Mischung zweier wässriger Bindemitteldispersionen je mit einem Feststoffgehalt von 25 bis 60 Gew.-% vorliegt, wobei das Bindemittel in Form einer wässrigen Polyurethandispersion und einer wässrigen anionischen Polyesterpolyurethandispersion vorliegt.

13. Wässriges Beschichtungsmittel nach Anspruch 12, **dadurch gekennzeichnet, dass** das Beschichtungsmittel 5 bis 20 Gew.-%, insbesondere 8 bis 15 Gew.-% oder 10 bis 13 Gew.-%, Bindemittel und/oder 8 bis 22 Gew.-%, insbesondere 10 bis 20 Gew.-% oder 13 bis 17 Gew.-%, Vernetzungspolymer und/oder 1 bis 8 Gew.-%, insbesondere 2 bis 7 Gew.-% oder 3 bis 6 Gew.-%, Partikel mit einer mittleren Partikelgröße von 1 bis 20 µm und/oder 0,01 bis 1 Gew.-%, insbesondere 0,01 bis 0,05 Gew.-%, der alkalischen Komponente und/oder 0,5 bis 4 Gew.-%, insbesondere 1 bis 2 Gew.-% Härter und/oder zusätzlich 0,1 bis 5 Gew.-%, insbesondere 0,1 bis 3 Gew.-% oder 0,5 bis 1,5 Gew.-%, Mattierungsmittel enthält, jeweils bezogen auf das Gesamtgewicht des Beschichtungsmittels.

14. Wässriges Beschichtungsmittel nach Anspruch 12 oder 13, **dadurch gekennzeichnet, dass** das Bindemittel gemäß Anspruch 2 und/oder das Vernetzungspolymer gemäß Anspruch 3 und/oder die Partikel mit einer mittleren Partikelgröße von 1 bis 20 µm gemäß Anspruch 4 und/oder die alkalische Komponente gemäß Anspruch 5 und/oder das optionale Mattierungsmittel gemäß Anspruch 6 und/oder der Härter gemäß Anspruch 11 definiert ist und/oder die Zusammensetzung zusätzlich mindestens ein Pigment und/oder ein oder mehrere Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Substratbenetzungsmittel, Lösungsmittel und Verdicker enthält.

15. Verwendung eines wässrigen Beschichtungsmittels gemäß einem der Ansprüche 12 bis 14 als Lack, insbesondere im Innen- und/oder Außenbereich.

## Claims

1. Kit-of-parts for producing an aqueous coating agent containing, in each case based on the total weight of the coating agent,
a. 3 to 25 wt.% binder,
b. 5 to 25 wt.% cross-linking polymer,
c. 0.5 to 10 wt.% particles having an average particle size of 1 to 20 µm,
d. 0.01 to 2 wt.% of an alkaline component,
e. 0.5 to 5 wt.% hardener,
f. 30 to 70 wt.% water,
wherein the aqueous coating agent has a pH of 8 to 10.5, and wherein the kit-of-parts comprises:
A) an aqueous composition containing, in each case based on the total weight of the composition,
i. 3 to 25 wt.% binder,
ii. 5 to 25 wt.% cross-linking polymer,
iii. 0.5 to 10 wt.% particles having an average particle size of 1 to 20 µm,
iv. 0.01 to 2 wt.% of an alkaline component,
v. 30 to 70 wt.% water
B) a hardener,
**characterized in that** the hardener is a carbodiimide **and in that** the binder is a mixture of two aqueous binder dispersions each having a solids content of 25 to 60 wt.%, wherein the binder is in the form of an aqueous polyurethane dispersion and an aqueous anionic polyester polyurethane dispersion.

2. Kit-of-parts according to claim 1, **characterized in that** the composition contains 5 to 20 wt.%, in particular 8 to 15 wt.% or 10 to 13 wt.%, binder, in each case based on the total weight of the composition, and/or the binder is a mixture of two aqueous binder dispersions each having a solids content of 30 to 50 wt.% or 35 to 40 wt.%.

3. Kit-of-parts according to either claim 1 or 2, **characterized in that** the composition contains 8 to 22 wt.%, in particular 10 to 20 wt.% or 13 to 17 wt.%, of the cross-linking polymer, in each case based on the total weight of the composition, and/or the cross-linking polymer has at least one carboxyl group and/or at least one hydroxyl group and/or at least one amino group, in particular at least one carboxyl group, and/or is selected from the group consisting of anionic polyurethanes, aliphatic anionic polyurethanes, acrylic acid-containing polymers, polyurethane-acrylate emulsions, polyurethane-alkyd emulsions, polyurethanes, polyester polyurethanes, anionic polyester polyurethanes, aliphatic anionic polyester polyurethanes, polycarbonate ester polyurethanes, polyether polyols, polyacrylate dispersions, alkyd emulsions, and the hydroxy-functional polymers and mixtures thereof.

4. Kit-of-parts according to any of the preceding claims,
**characterized in that** the composition contains 1 to 8 wt.%, in particular 2 to 7 wt.% or 3 to 6 wt.%, particles having an average particle size of 1 to 20 µm, in each case based on the total weight of the composition, and/or the particles having an average particle size of 1 to 20 µm have an average particle size of 2 to 17 µm, in particular 3 to 15 µm or 4 to 13 µm or 6 to 10 µm and/or are selected from the group consisting of polyurethane particles, polymethyl methacrylate particles, polymethyl urea particles, silicate acrylic resin polymer particles, polymeric hollow microspheres, cellulose fibers, textile fibers, cork dust and mixtures thereof, in particular silicate acrylic resin polymer particles.

5. Kit-of-parts according to any of the preceding claims,
**characterized in that** the composition contains 0.01 to 1 wt.%, in particular 0.01 to 0.05 wt.%, of the alkaline component, in each case based on the total weight of the composition, **and/or in that** the alkaline component is selected from the group consisting of potassium hydroxide, sodium hydroxide, calcium hydroxide, ammonia, triethylamine, dimethylaminoethanol, aminomethyl propanol, dimethylglucamine and mixtures thereof **and/or in that** the alkaline component in its pure state is a water-soluble gas **and/or in that** the alkaline component is in the form of an aqueous solution, in particular aqueous ammonia.

6. Kit-of-parts according to any of the preceding claims,
**characterized in that** the composition additionally contains 0.1 to 5 wt.%, in particular 0.1 to 3 wt.% or 0.5 to 1.5 wt.%, matting agent, in each case based on the total weight of the composition, wherein the matting agent is preferably selected from the group consisting of pyrogenic silica, polymethyl urea, ceramic microspheres, diatomaceous earth, quartz flour, talc and wax additives such as polyethylene waxes and/or has an average particle size, in particular a D₅₀ value, of 1 to 20 µm, in particular 5 to 15 µm, in particular 7 to 13 µm, in particular 8 to 12 µm, in particular 9 to 11 µm.

7. Kit-of-parts according to any of the preceding claims,
**characterized in that** the composition additionally contains at least one pigment and/or the composition additionally contains one or more further admixtures and/or additives selected from the group consisting of defoamers, dispersants, wetting agents, preservatives, stabilizers, surface protectants, water repellents, substrate wetting agents, solvents and thickeners.

8. Kit-of-parts for producing an aqueous coating agent containing, in each case based on the total weight of the coating agent,
a. 3 to 25 wt.% binder,
b. 5 to 25 wt.% cross-linking polymer,
c. 0.5 to 10 wt.% particles having an average particle size of 1 to 20 µm,
d. 0.01 to 2 wt.% of an alkaline component,
e. 0.5 to 5 wt.% hardener,
f. 30 to 70 wt.% water,
wherein the aqueous coating agent has a pH of 8 to 10.5 and wherein the kit-of-parts comprises:
A) an aqueous composition obtainable by means of a method comprising the following steps
a. providing a composition containing, in each case based on the total weight of the composition,
i. 3 to 25 wt.% binder,
ii. 5 to 25 wt.% cross-linking polymer,
iii. 0.5 to 10 wt.% particles having an average particle size of 1 to 20 µm,
iv. 0.01 to 2 wt.% of an alkaline component,
v. 30 to 70 wt.% water,
b. dispersing the components mentioned in a.
B) a hardener,
**characterized in that** the hardener is a carbodiimide **and in that** the binder is a mixture of two aqueous binder dispersions each having a solids content of 25 to 60 wt.%, wherein the binder is in the form of an aqueous polyurethane dispersion and an aqueous anionic polyester polyurethane dispersion.

9. Kit-of-parts according to claim 8, **characterized in that** the composition contains 5 to 20 wt.%, in particular 8 to 15 wt.% or 10 to 13 wt.%, binder and/or 8 to 22 wt.%, in particular 10 to 20 wt.% or 13 to 17 wt.%, cross-linking polymer and/or 1 to 8 wt.%, in particular 2 to 7 wt.% or 3 to 6 wt.%, particles having an average particle size of 1 to 20 µm and/or 0.01 to 1 wt.%, in particular 0.01 to 0.05 wt.%, of the alkaline component and/or additionally 0.1 to 5 wt.%, in particular 0.1 to 3 wt.% or 0.5 to 1.5 wt.%, matting agent, in each case based on the total weight of the composition.

10. Kit-of-parts according to either claim 8 or 9, **characterized in that** the binder is defined according to claim 2 and/or the cross-linking polymer is defined according to claim 3 and/or the particles having an average particle size of 1 to 20 µm are defined according to claim 4 and/or the alkaline component is defined according to claim 5 and/or the optional matting agent is defined according to claim 6 and/or the composition additionally contains at least one pigment and/or one or more additives selected from the group consisting of defoamers, dispersants, wetting agents, preservatives, stabilizers, surface protectants, water repellents, substrate wetting agents, solvents and thickeners.

11. Kit-of-parts according to any of the preceding claims,
**characterized in that** the hardener is an agent that is capable of forming, together with carboxyl groups, an active ester, namely polymeric carbodiimide.

12. Aqueous coating agent containing, in each case based on the total weight of the coating agent,
a. 3 to 25 wt.% binder,
b. 5 to 25 wt.% cross-linking polymer,
c. 0.5 to 10 wt.% particles having an average particle size of 1 to 20 µm,
d. 0.01 to 2 wt.% of an alkaline component,
e. 0.5 to 5 wt.% hardener,
f. 30 to 70 wt.% water,
wherein the aqueous coating agent has a pH of 8 to 10.5,
**characterized in that** the hardener is a carbodiimide **and in that** the binder is a mixture of two aqueous binder dispersions each having a solids content of 25 to 60 wt.%, wherein the binder is in the form of an aqueous polyurethane dispersion and an aqueous anionic polyester polyurethane dispersion.

13. Aqueous coating agent according to claim 12, **characterized in that** the coating agent contains 5 to 20 wt.%, in particular 8 to 15 wt.% or 10 to 13 wt.%, binder and/or 8 to 22 wt.%, in particular 10 to 20 wt.% or 13 to 17 wt.%, cross-linking polymer and/or 1 to 8 wt.%, in particular 2 to 7 wt.% or 3 to 6 wt.%, particles having an average particle size of 1 to 20 µm and/or 0.01 to 1 wt.%, in particular 0.01 to 0.05 wt.%, of the alkaline component and/or 0.5 to 4 wt.%, in particular 1 to 2 wt.%, hardener and/or additionally 0.1 to 5 wt.%, in particular 0.1 to 3 wt.% or 0.5 to 1.5 wt.%, of matting agent, in each case based on the total weight of the coating agent.

14. Aqueous coating agent according to either claim 12 or 13, **characterized in that** the binder is defined according to claim 2 and/or the cross-linking polymer is defined according to claim 3 and/or the particles having an average particle size of 1 to 20 µm are defined according to claim 4 and/or the alkaline component is defined according to claim 5 and/or the optional matting agent is defined according to claim 6 and/or the hardener is defined according to claim 11 and/or the composition additionally contains at least one pigment and/or one or more additives selected from the group consisting of defoamers, dispersants, wetting agents, preservatives, stabilizers, surface protectants, water repellents, substrate wetting agents, solvents and thickeners.

15. Use of an aqueous coating agent according to any of claims 12 to 14 as a lacquer, in particular for indoor and/or outdoor use.

## Revendications

1. Trousse de pièces pour la préparation d'un agent de revêtement à base d'eau contenant, respectivement par rapport au poids total de l'agent de revêtement,
a. 3 à 25 % en poids de liant,
b. 5 à 25 % en poids de polymère de réticulation,
c. 0,5 à 10 % en poids de particules d'une taille moyenne de particule allant de 1 à 20 µm,
d. 0,01 à 2 % en poids d'un composant alcalin,
e. 0,5 à 5 % en poids de durcisseur,
f. 30 à 70 % en poids d'eau,
dans laquelle l'agent de revêtement à base d'eau présente une valeur de pH allant de 8 à 10,5, et dans laquelle la trousse de pièces comprend :
A) une composition à base d'eau contenant, respectivement par rapport au poids total de la composition,
i. 3 à 25 % en poids de liant,
ii. 5 à 25 % en poids de polymère de réticulation,
iii. 0,5 à 10 % en poids de particules d'une taille moyenne de particule allant de 1 à 20 µm,
iv. 0,01 à 2 % en poids d'un composant alcalin,
v. 30 à 70 % en poids d'eau,
B) un durcisseur,
**caractérisée en ce que** le durcisseur est du carbodiimide et **en ce que** le liant se présente sous la forme d'un mélange de deux dispersions de liants à base d'eau ayant chacune une teneur en matières solides allant de 25 à 60 % en poids, dans laquelle le liant se présente sous la forme d'une dispersion de polyuréthane à base d'eau et d'une dispersion de polyester-polyuréthane anionique à base d'eau.

2. Trousse de pièces selon la revendication 1, **caractérisée en ce que** la composition contient 5 à 20 % en poids, en particulier 8 à 15 % en poids ou 10 à 13 % en poids de liant, respectivement par rapport au poids total de la composition et/ou le liant se présente sous la forme d'un mélange de deux dispersions de liants à base d'eau ayant chacune une teneur en matières solides allant de 30 à 50 % en poids ou 35 à 40 % en poids.

3. Trousse de pièces selon la revendication 1 ou 2, **caractérisée en ce que** la composition contient 8 à 22 % en poids, en particulier 10 à 20 % en poids ou 13 à 17 % en poids de polymère de réticulation, respectivement par rapport au poids total de la composition et/ou le polymère de réticulation présente au moins un groupe carboxyle et/ou au moins un groupe hydroxyle et/ou au moins un groupe amino, en particulier au moins un groupe carboxyle, et/ou est choisi dans le groupe constitué par les polyuréthanes anioniques, polyuréthanes anioniques aliphatiques, émulsions polyuréthane-acrylate polymères contenant de l'acide acrylique, émulsions polyuréthane-alkyle, polyuréthanes, polyester-polyuréthanes, polyester-polyuréthanes anioniques, polyester-polyuréthanes anioniques aliphatiques, polyuréthanes de polycarbonate-ester, polyéther-polyols, dispersions de polyacrylate, émulsions d'alkyle, ainsi que leurs polymères à fonction hydroxy et leurs mélanges.

4. Trousse de pièces selon l'une des revendications précédentes, **caractérisée en ce que** la composition contient 1 à 8 % en poids, en particulier 2 à 7 % en poids ou 3 à 6 % en poids de particules ayant une taille moyenne de particule allant de 1 à 20 µm, respectivement par rapport au poids total de la composition et/ou les particules ayant une taille moyenne de particule allant de 1 à 20 µm présentent une taille moyenne de particule allant de 2 à 17 µm, en particulier de 3 à 15 µm ou allant de 4 à 13 µm ou de 6 à 10 µm et/ou sont choisies dans le groupe constitué par les particules de polyuréthane, particules de polyméthacrylate de méthyle, particules de polyméthylène-urée, particules polymères de résine acrylique de silicate, microsphères creuses polymères, fibres de cellulose, fibres textiles, farine de liège et leurs mélanges, en particulier particules polymères de résine acrylique de silicate.

5. Trousse de pièces selon l'une des revendications précédentes, **caractérisée en ce que** la composition contient 0,01 à 1 % en poids, en particulier 0,01 à 0,05 % en poids du composant alcalin, respectivement par rapport au poids total de la composition, **et/ou en ce que** le composant alcalin est choisi dans le groupe constitué par l'hydroxyde de potassium, hydroxyde de sodium, hydroxyde de calcium, ammoniac, triéthylamine, diméthylaminoéthanol, aminométhylpropanol, diméthylglucamine et leurs mélanges **et/ou en ce que,** à l'état pur, le composant alcalin est un gaz soluble dans l'eau **et/ou en ce que** le composant alcalin se présente sous la forme d'une solution à base d'eau, en particulier l'ammoniaque.

6. Trousse de pièces selon l'une des revendications précédentes, **caractérisée en ce que** la composition comprend en outre 0,1 à 5 % en poids, en particulier 0,1 à 3 % en poids ou 0,5 à 1,5 % en poids d'agent de matage, respectivement par rapport au poids total de la composition, dans laquelle l'agent de matage est de préférence choisi dans le groupe constitué par la silice pyrogénée, polyméthylène-urée, microsphères céramiques, terre de diatomées, poudres de quartz, talc et additifs de cire tels que les cires de polyéthylène et/ou présente une taille moyenne de particule, en particulier une valeur D₅₀ allant de 1 à 20 µm, en particulier de 5 à 15 µm, en particulier de 7 à 13 µm, en particulier de 8 à 12 µm, en particulier de 9 à 11 µm.

7. Trousse de pièces selon l'une des revendications précédentes, **caractérisée en ce que** la composition contient en outre au moins un pigment et/ou la composition contient en plus un ou plusieurs compléments et/ou additifs supplémentaires choisis dans le groupe constitué des antimousses, dispersants, agents mouillants, conservateurs, stabilisants, agents de protection de surface, agents d'hydrophobisation, agents mouillants de substrat, solvants et épaississants.

8. Trousse de pièces pour la préparation d'un agent de revêtement à base d'eau contenant, respectivement par rapport au poids total de l'agent de revêtement,
a. 3 à 25 % en poids de liant,
b. 5 à 25 % en poids de polymère de réticulation,
c. 0,5 à 10 % en poids de particules d'une taille moyenne de particule allant de 1 à 20 µm,
d. 0,01 à 2 % en poids d'un composant alcalin,
e. 0,5 à 5 % en poids de durcisseur,
f. 30 à 70 % en poids d'eau,
dans laquelle l'agent de revêtement à base d'eau présente une valeur de pH allant de 8 à 10,5, et dans laquelle la trousse de pièces comprend :
A) une composition à base d'eau pouvant être obtenue par un procédé comprenant les étapes consistant à
a. fournir une composition contenant, respectivement par rapport au poids total de la composition,
i. 3 à 25 % en poids de liant,
ii. 5 à 25 % en poids de polymère de réticulation,
iii. 0,5 à 10 % en poids de particules d'une taille moyenne de particule allant de 1 à 20 µm,
iv. 0,01 à 2 % en poids d'un composant alcalin,
v. 30 à 70 % en poids d'eau,
b. disperser les composants mentionnés à l'étape a
B) un durcisseur,
**caractérisée en ce que** le durcisseur est du carbodiimide et **en ce que** le liant se présente sous la forme d'un mélange de deux dispersions de liants à base d'eau ayant chacune une teneur en matières solides allant de 25 à 60 % en poids, dans laquelle le liant se présente sous la forme d'une dispersion de polyuréthane à base d'eau et d'une dispersion de polyester-polyuréthane anionique à base d'eau.

9. Trousse de pièces selon la revendication 8, **caractérisée en ce que** la composition comprend 5 à 20 % en poids, en particulier 8 à 15 % en poids ou 10 à 13 % en poids de liant et/ou 8 à 22 % en poids, en particulier 10 à 20 % en poids ou 13 à 17 % en poids de polymère de réticulation et/ou 1 à 8 % en poids, en particulier 2 à 7 % en poids ou 3 à 6 % en poids de particules ayant une taille moyenne de particule allant de 1 à 20 µm et/ou 0,01 à 1 % en poids, en particulier 0,01 à 0,05 % en poids du composant alcalin et/ou en outre 0,1 à 5 % en poids, en particulier 0,1 à 3 % en poids ou 0,5 à 1,5 % en poids d'agent de matage, respectivement par rapport au poids total de la composition.

10. Trousse de pièces selon l'une des revendications 8 ou 9,
**caractérisée en ce que** le liant est défini selon la revendication 2 et/ou le polymère de réticulation est défini selon la revendication 3 et/ou les particules ayant une taille moyenne de particule allant de 1 à 20 µm sont définies selon la revendication 4 et/ou le composant alcalin est défini selon la revendication 5 et/ou l'agent de matage en option est défini selon la revendication 6 et/ou la composition contient en outre au moins un pigment et/ou un ou plusieurs additifs choisis dans le groupe constitué des antimousses, dispersants, agents mouillants, conservateurs, stabilisants, agents de protection de surface, agents d'hydrophobisation, agents mouillants de substrat, solvants et épaississants.

11. Trousse de pièces selon l'une des revendications précédentes, **caractérisée en ce que** le durcisseur est un agent capable de former un ester actif, notamment un carbodiimide polymère, avec des groupes carboxyle.

12. Agent de revêtement à base d'eau contenant, respectivement par rapport au poids total de l'agent de revêtement,
a. 3 à 25 % en poids de liant,
b. 5 à 25 % en poids de polymère de réticulation,
c. 0,5 à 10 % en poids de particules d'une taille moyenne de particule allant de 1 à 20 µm,
d. 0,01 à 2 % en poids d'un composant alcalin,
e. 0,5 à 5 % en poids de durcisseur,
f. 30 à 70 % en poids d'eau,
dans lequel l'agent de revêtement à base d'eau présente une valeur de pH allant de 8 à 10,5, **caractérisé en ce que** le durcisseur est du carbodiimide **et en ce que** le liant se présente sous la forme d'un mélange de deux dispersions de liants à base d'eau ayant chacune une teneur en matières solides allant de 25 à 60 % en poids, dans laquelle le liant se présente sous la forme d'une dispersion de polyuréthane à base d'eau et d'une dispersion de polyester-polyuréthane anionique à base d'eau.

13. Agent de revêtement à base d'eau selon la revendication 12, **caractérisé en ce que** l'agent de revêtement contient 5 à 20 % en poids, en particulier 8 à 15 % en poids ou 10 à 13 % en poids de liant et/ou 8 à 22 % en poids, en particulier 10 à 20 % en poids ou 13 à 17 % en poids de polymère de réticulation et/ou 1 à 8 % en poids, en particulier 2 à 7 % en poids ou 3 à 6 % en poids de particules ayant une taille moyenne de particule allant de 1 à 20 µm et/ou 0,01 à 1 % en poids, en particulier 0,01 à 0,05 % en poids du composant alcalin et/ou 0,5 à 4 % en poids, en particulier 1 à 2 % en poids de durcisseur et/ou en outre 0,1 à 5 % en poids, en particulier de 0,1 à 3 % en poids ou 0,5 à 1,5 % en poids d'agent de matage, respectivement par rapport au poids total de l'agent de revêtement.

14. Agent de revêtement à base d'eau selon la revendication 12 ou 13, **caractérisé en ce que** le liant est défini selon la revendication 2 et/ou le polymère de réticulation est défini selon la revendication 3 et/ou les particules ayant une taille moyenne de particule allant de 1 à 20 µm sont définies selon la revendication 4 et/ou le composant alcalin est défini selon la revendication 5 et/ou l'agent de matage en option est défini selon la revendication 6 et/ou le durcisseur est défini selon la revendication 11 et/ou la composition contient en outre au moins un pigment et/ou un ou plusieurs additifs choisis dans le groupe constitué des antimousses, dispersants, agents mouillants, conservateurs, stabilisants, agents de protection de surface, agents d'hydrophobisation, agents mouillants de substrat, solvants et épaississants.

15. Utilisation d'un agent de revêtement à base d'eau selon l'une des revendications 12 à 14 comme laque, en particulier destinée à un usage intérieur et/ou extérieur.
